Europäisches Patentamt

**European Patent Office**

Office européen des brevets

(11) Numéro de publication: **0 058 612**

**A1**

## (12) DEMANDE DE BREVET EUROPEEN

(21) Numéro de dépôt: **82400245.5**

(22) Date de dépôt: **11.02.82**

(51) Int. Cl.³: **A 01 M 21/04**

(30) Priorité: **17.02.81 FR 8103050**

(43) Date de publication de la demande:
**25.08.82 Bulletin 82/34**

(84) Etats contractants désignés:
**AT BE CH DE GB IT LI LU NL SE**

(71) Demandeur: **Rives, Gérard**
**37 Chemin de la Ségognole Noisy sur Ecole**
**F-77123 Le Vaudoue(FR)**

(72) Inventeur: **Rives, Gérard**
**37 Chemin de la Ségognole Noisy sur Ecole**
**F-77123 Le Vaudoue(FR)**

(74) Mandataire: **Barnay, André François et al,**
**Cabinet Barnay 80 rue Saint-Lazare**
**F-75009 Paris(FR)**

(54) **Dispositif permettant de détruire les mauvaises herbes par application d'un herbicide liquide.**

(57) L'invention concerne les appareils permettant d'humecter à volonté les végétaux que l'on veut détruire, par contact à l'aide d'un herbicide, se trouvant au pied de plantations.

Le dispositif, comprend une étoile (16) rotative dont les branches (3) sont parées de corps spongieux (5). L'alimentation en produit herbicide se fait par capillarité

FIG. 2

EP 0 058 612 A1

Dispositif permettant de détruire les mauvaises herbes
par application d'un herbicide liquide.

L'invention concerne un dispositif permettant de détruire les mauvaises herbes au pied de plantation par application d'un herbicide liquide.

Aucun des dispositifs connus de ce genre n'est satisfaisant pour l'application d'herbicides "systémiques", c'est-à-dire totaux, par opposition aux herbicides sélectifs.

L'un des moyens utilisés actuellement est le traitement par pulvérisation, qui oblige à opérer lorsqu'il n'y a pas de vent, en raison du risque de pollution sur les plantes que l'on désire conserver. De plus, la consommation en liquide herbicide est exagérée, puisque seule une faible partie de celui-ci touche les végétaux à détruire.

Un autre moyen consiste à désherber à la main, ce qui revient cher du fait de la main-d'oeuvre nécessaire.

Le dispositif qui fait l'objet de l'invention permet de remédier à ces inconvénients. Il est caractérisé par le fait qu'il comprend un organe applicateur monté à l'extrémité d'un support et constitué par une étoile pouvant tourner autour de son propre axe, orienté sensiblement verticalement, et comportant des branches disposées autour d'un corps central et garnies sur leur face inférieure d'éléments spongieux alimentés en liquide herbicide à partir d'un réservoir situé au-dessus de l'étoile, lesquels, appliqués sur les végétaux à détruire, en assurent l'humectation en herbicide. De préférence, aux éléments spongieux sont adjoints des poils de brosse transmettant l'herbicide par frottement aux végétaux à détruire.

L'étoile, dont la forme et le nombre de branches peuvent varier suivant les utilisations visées, se comporte dans une plantation comme une roue dentée qui engrène avec une crémaillère formée par les pieds des plantes à traiter, autour desquels on veut détruire les mauvaises herbes. Cette étoile peut tourner soit librement, soit sous l'action d'un moteur d'entraînement. Elle peut par ailleurs soit former une pièce monobloc, soit comporter des branches interchangeables fixées de manière démontable au corps central.

L'alimentation en liquide des branches de l'étoile est réalisable de différentes manières.

Les éléments spongieux précités peuvent être alimentés via des canaux creusés radialement dans les branches de l'étoile et reliés à un tube commun aboutissant au réservoir, ce tube étant avantageusement doté d'un appareil de réglage de débit tel qu'un robinet ou un gicleur calibré.

Les éléments spongieux peuvent aussi être alimentés par trempage de leur extrémité tournée vers le centre de l'étoile dans une cuve intermédiaire formée par le corps central, creux, laquelle est reliée au réservoir et où le niveau du liquide herbicide est maintenu constant. L'alimentation en liquide s'effectue alors par capillarité.

Un dispositif selon l'invention peut être utilisé soit unitairement, soit en plusieurs unités associées afin de traiter une plus grande largeur ou plusieurs rangs de plantes à désherber.

La description qui va suivre en regard des dessins annexés à titre d'exemples non limitatifs, permettra de bien comprendre comment la présente invention peut être mise en pratique.

La figure 1 représente, en coupe axiale, un dispositif selon l'invention.

La figure 2 représente en perspective le dispositif de la figure 1 vu de dessus.

La figure 3 représente, à la manière de la figure 1, une variante de réalisation.

La figure 4 illustre schématiquement le mouvement du dispositif lors du travail.

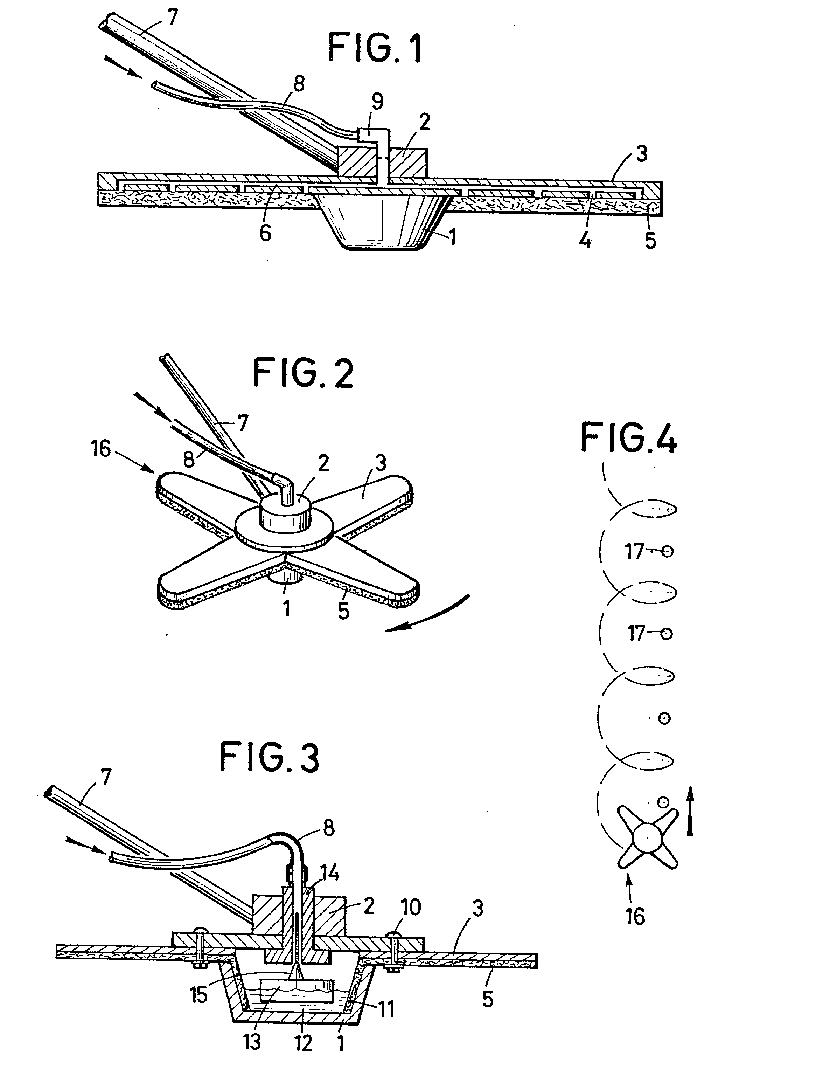

Le dispositif que montrent les figures 1 et 2 comporte une pièce rotative en forme d'étoile 16 à quatre branches 3 rayonnant autour d'un corps central 1 monté, par l'intermédiaire d'un palier 2 d'axe vertical, à l'extrémité d'un bras de manipulation 7 par lequel le dispositif peut être relié à un véhicule d'entraînement. Les branches 3 sont garnies sur leur face inférieure d'éléments spongieux 5 qui reçoivent le liquide herbicide d'un réservoir (non représenté) situé au-dessus de l'étoile 16 via un tube souple 8, un raccord tournant 9 central et des canaux 6 creusés radialement dans les branches 3 et débouchant sur les éléments spongieux 5 par des orifices 4. Les éléments spongieux 5 peuvent être dotés de touffes ou de bandes de poils assurant l'humectation par brossage des végétaux à détruire.

Le corps central 1 est renflé vers le bas, comme représenté, pour éviter aux éléments spongieux 5 ou aux poils précités de toucher le sol et ainsi de se détériorer. Il serait également possible d'adjoindre au bras 7 un patin ou une roue folle servant à régler la hauteur de l'étoile 16 par rapport au sol.

On a représenté à la figure 3 une variante de réalisation, dans laquelle le corps central 1 est creux et forme une cuve recevant le liquide du réservoir via le tube 8 et un raccord tournant 14 dont l'orifice de sortie est obturable par un pointeau 15 porté par un flotteur 13 placé à l'intérieur de la cuve, de sorte que le niveau de liquide 12 dans celle-ci demeure constant malgré les prélèvements qu'effectuent par capillarité les éléments spongieux 5 dont l'extrémité 11 située dans la partie centrale de l'étoile 16 baigne dans le liquide 12.

Un autre moyen envisageable pour maintenir contant le niveau dans la cuve consiste à rendre hermétiquement étanche le réservoir auquel aboutit le tube 8 et à prévoir un second tube ouvert à l'air libre et pénétrant verticalement dans la cuve. La hauteur de l'extrémité du tube 8 à l'intérieur de la cuve détermine le niveau du liquide 12. Si ce niveau baisse, de l'air est envoyé par le second tube et le tube 8 dans le réservoir, permettant au liquide de descendre dans la cuve jusqu'à ce que le niveau y soit de nouveau au ras de l'entrée du tube 8.

D'autres dispositions peuvent être utilisées pour assurer une régulation automatique du débit de produit liquide, donc une alimentation correcte des éléments spongieux de l'étoile dont les besoins en liquide sont conditionnés par la densité des végétaux à détruire.

On a représenté sur la figure 3 une variante de construction selon laquelle l'étoile 16 n'est plus monobloc comme dans le cas de la figure 1; ses branches 3 sont ici des pièces indépendantes et interchangeables, fixées au corps central 1 par des vis 10.

La figure 4 montre que, au cours de son utilisation, l'étoile 16 progresse en tournant à plat sur elle-même par "engrènement" de ses branches avec les pieds 17 des plantes à désherber, tandis que les éléments spongieux 5 ou les poils associés à ceux-ci frottent sur les végétaux à détruire et y déposent par humectation l'herbicide liquide.

REVENDICATIONS

1.- Dispositif permettant de détruire les mauvaises herbes au pied de plantations par application d'un herbicide liquide, caractérisé par le fait qu'il comprend un organe applicateur monté à l'extrémité d'un support et constitué par une étoile (16) pouvant tourner autour de son propre axe, orienté sensiblement verticalement, et comportant des branches (3) disposées autour d'un corps central (1) et garnies sur leur face inférieure d'éléments spongieux (5) alimentés en liquide herbicide à partir d'un réservoir situé au-dessus de l'étoile, lesquels, appliqués sur les végétaux à détruire, en assurent l'humectation en herbicide.

2.- Dispositif selon la revendication 1, caractérisé par le fait qu'aux éléments spongieux (5) sont adjoints des poils de brosse transmettant l'herbicide par frottement aux végétaux à détruire.

3.- Dispositif selon la revendication 1 ou 2, caractérisé par le fait que les éléments spongieux (5) sont alimentés via des canaux (6) creusés radialement dans les branches (3) de l'étoile (16) et reliés à un tube commun (8) aboutissant au réservoir.

4.- Dispositif selon la revendication 3, caractérisé par le fait que le tube (8) est doté d'un appareil de réglage de débit tel qu'un robinet ou un gicleur calibré.

5.- Dispositif selon la revendication 1 ou 2, caractérisé par le fait que les éléments spongieux (5) sont alimentés par trempage de leur extrémité (11) tournée vers le centre de l'étoile (16) dans une cuve intermédiaire formée par le corps central (1), creux, laquelle est reliée au réservoir et où le niveau du liquide herbicide (12) est maintenu constant.

6.- Dispositif selon l'une quelconque des revendications 1 à 5, caractérisé par le fait que le corps central (1) est renflé et constitue un organe d'appui sur le sol maintenant les branches (3) de l'étoile à distance de celui-ci.

7.- Dispositif selon l'une quelconque des revendications 1 à 6, caractérisé par le fait que l'étoile (16) tourne librement autour de son axe.

8.- Dispositif selon l'une quelconque des revendications 1 à 6, caractérisé par le fait que l'étoile (16) est entraînée en rotation par un moteur.

9.- Dispositif selon l'une quelconque des revendications 1 à 8, caractérisé par le fait que l'étoile (16) forme une pièce monobloc.

10.- Dispositif selon l'une quelconque des revendications 1 à 8, caractérisé par le fait que les branches (3) de l'étoile (16) sont fixées de façon démontable au corps central (1).

1/1

FIG. 1

FIG. 2

FIG. 3

FIG.4

0058612

**0058612**

Numéro de la demande

Office européen des brevets

**RAPPORT DE RECHERCHE EUROPEENNE**

EP 82 40 0245

| Catégorie | Citation du document avec indication, en cas de besoin, des parties pertinentes | Revendication concernée |
|---|---|---|
| A | US - A - 3 184 888 (H.F. FRUTH et al.)<br><br>* Colonne 2, ligne 16 - colonne 3, ligne 68; figures 1-8 * | 1 |
| A | US - A - 3 096 534 (C.E. JONES) | |
| A | FR - A - 2 322 538 (SOCIETE D'ETUDES ET DE CONSTRUCTIONS MECANIQUE DE CORBEIL) | |
| A | GB - A - 1 085 635 (O.L. SIWERS-SON) | |
| A | US - A - 1 368 123 (S.A. DONALD-SON) | |
| A | US - A - 2 551 096 (H.A. CHITTICK) | |

**DOCUMENTS CONSIDERES COMME PERTINENTS**

**CLASSEMENT DE LA DEMANDE (Int. Cl. ³)**

A 01 M 21/04

**DOMAINES TECHNIQUES RECHERCHES (Int. Cl. ³)**

A 01 M

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 06-04-1982 | NEHRDICH |

OEB Form 1503.1   06.78